(19) Europäisches Patentamt

European Patent Office

Office européen des brevets

(11) **EP 0 651 582 B1**

(12) **EUROPEAN PATENT SPECIFICATION**

(45) Date of publication and mention
of the grant of the patent:
**08.03.2000 Bulletin 2000/10**

(51) Int. Cl.[7]: **H04N 7/32**

(21) Application number: **94203073.5**

(22) Date of filing: **21.10.1994**

(54) **Device for transmitting television pictures and device for receiving said pictures**

Fernsehbildersendeanlage und Anlage um diese Bilder zu Empfangen

Dispositif pour transmettre des images de télévision et dispositif pour recevoir ces images

(84) Designated Contracting States:
**AT DE FR GB**

(30) Priority: **29.10.1993 BE 9301182**

(43) Date of publication of application:
**03.05.1995 Bulletin 1995/18**

(73) Proprietor:
**Koninklijke Philips Electronics N.V.
5621 BA Eindhoven (NL)**

(72) Inventors:
• **De With, Peter H. N.
NL-5656 AA Eindhoven (NL)**
• **Nijssen, Stephanus J. J.
NL-5656 AA Eindhoven (NL)**

(74) Representative:
**Schmitz, Herman Jan Renier et al
INTERNATIONAAL OCTROOIBUREAU B.V.,
Prof. Holstlaan 6
5656 AA Eindhoven (NL)**

(56) References cited:
**EP-A- 0 260 748       EP-A- 0 419 752
EP-A- 0 551 599       EP-A- 0 556 507
US-A- 4 651 206       US-A- 5 212 742**

• **'International Organization for Standardization.
ISO/IEC JTC1/SC29/WG11 N0156 MPEG92/'
March 1992 , TOKYO(JP) * page 146, line 16 -
page 148, line 18 ***
• **IEEE TRANSACTIONS ON CIRCUITS AND
SYSTEMS FOR VIDEO TECHNOLOGY, vol. 3,
NEW YORK US, page 54 M. T. ORCHARD
'Predictive Motion-field Segmentation for Image
Sequence Coding'**

## Description

FIELD OF THE INVENTION

The invention relates to a device for transmitting television pictures and to a device for receiving television pictures thus transmitted. Both devices may be combined in one apparatus, constituting a video recorder.

DESCRIPTION OF THE PRIOR ART

A device for transmitting television pictures of the type described in the opening paragraph is known from European Patent Application EP 0 556 507. The known device comprises means for dividing each television picture into blocks; means for forming a motion vector for selected blocks; means for arranging the motion vectors of contiguous blocks forming a sub-picture into a reference vector and a plurality of difference vectors, the motion vector of a selected block constituting the reference vector; and a variable-length encoder for encoding the reference vector and the difference vectors into code words of variable length.
With the known device, a certain extent of encoding efficiency is aimed at.

OBJECT AND SUMMARY OF THE INVENTION

It is an object of the invention to further improve the encoding efficiency of the device.
According to the invention the device is therefore characterized in that the variable-length encoder is of a type which allocates a code word of variable length to series of zero values and a subsequent non-zero value, the difference vectors of a sub-picture being applied to said encoder prior to the reference vector of said sub-picture.
The invention is based on the recognition that moving objects in a picture are generally larger than one block. This means that the blocks of a sub-picture generally comprise the same quantity of motion. The difference vectors then have a value of zero, whereas the reference vector is often unequal to zero. By applying the motion vectors in the form of a series of difference vectors followed by the reference vector to a decoder which allocates one variable-length code word to a series of zero values and a subsequent non-zero value, the device will often compress the motion information of a sub-picture to one code word only.
The difference vectors are preferably formed from the motion vectors of contiguous blocks. The difference in motion of a block with a contiguous block is smaller than with a more remote reference block because contiguous blocks generally have a larger extent of corresponding motion. The difference vectors thus more frequently have the value of zero and are then encoded more efficiently.
In a preferred embodiment of the device the variable-length encoder is constituted by the variable-length encoder for encoding coefficients which are obtained from picture transform of a block. A separate variable-length encoder can thus be dispensed with. Moreover, it has been found that the series of applied motion vectors statistically corresponds satisfactorily to the distribution of coefficients within a block in which series of zero coefficients are often followed by a non-zero coefficient. The encoding efficiency is thus even further improved.
A corresponding device for receiving television pictures is characterized in that the variable-length decoder is of a type which decodes a code word of variable length into a series of zero values and a subsequent non-zero value, and is arranged to decode the difference vectors prior to the reference vector.

BRIEF DESCRIPTION OF THE FIGURES

Fig. 1 shows diagrammatically a transmission system comprising a device for transmitting and receiving television pictures according to the invention.
Fig. 2 shows a possible choice of a sub-picture to explain the invention.
Fig. 3 shows a possible embodiment of a series former shown in Fig. 1.
Fig. 4 shows a possible embodiment of a converter shown in Fig.
Figs. 5A and 5B show some sub-pictures to explain the operation of the series former shown in Fig. 3.
Fig. 6 shows a further embodiment of a transmission system comprising a device for transmitting and receiving television pictures.

DESCRIPTION OF EMBODIMENTS

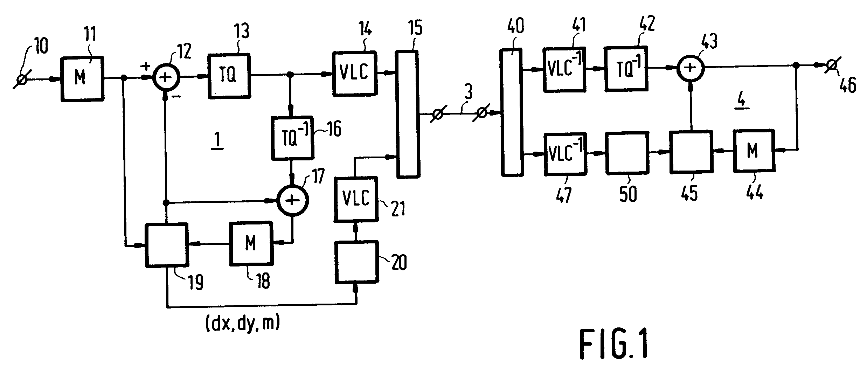

Fig. 1 shows diagrammatically a television transmission system comprising a device according to the invention.

The system comprises a device 1 for transmitting television pictures (hereinafter referred to as transmitter), a transmission channel 3 and a device 4 for receiving the transmitted television pictures (hereinafter referred to as receiver). In practice, the transmission system shown may be a video recorder. In that case transmission channel 3 is constituted as a storage medium.

An input 10 of transmitter 1 receives a digital video signal. The received pictures are stored in a first picture memory 11 and applied in blocks from this memory to a subtracter circuit 12. In the subtracter circuit a motion-compensated prediction picture is subtracted from the current picture. The difference picture is encoded in an encoding circuit 13 which performs, for example a Discrete Cosine Transform and quantizes the coefficients obtained therefrom. The quantized coefficients are subjected to variable-length encoding in a variable-length encoder 14. The code words thus obtained are transmitted *via* a multiplexer 15. A prediction loop in the transmitter comprises a decoding circuit 16 which performs the inverse operations of encoding circuit 13. The difference picture is thereby regained and added in an adder circuit 17 to the current prediction picture in order to form the next prediction picture in a second picture memory 18. A motion estimator 19 receives the current picture from picture memory 11 and the prediction picture from picture memory 18 and supplies the motion-compensated prediction picture to the subtracter circuit 12. Moreover, the motion estimator supplies motion vectors (dx,dy) for transmission to a receiver. The transmitter hitherto described is generally known and described, for example in "Digitale Bildcodierung, Bewegungskompensierte Interframe-DPCM", FKT 6/1992, pp. 416-424.

In accordance with the invention, the transmitter further comprises a series former 20 to which the motion vectors (dx,dy) are applied and which will be further described. The series former forms a series of difference vectors and a reference vector for a plurality of blocks of the television picture and applies these vectors to a second variable-length encoder 21. The two variable-length encoders 14 and 21 are coupled to the multiplexer 15 in order that this multiplexer applies both the code words which are representative of coefficients and the code words which are representative of motion vectors to transmission channel 3.

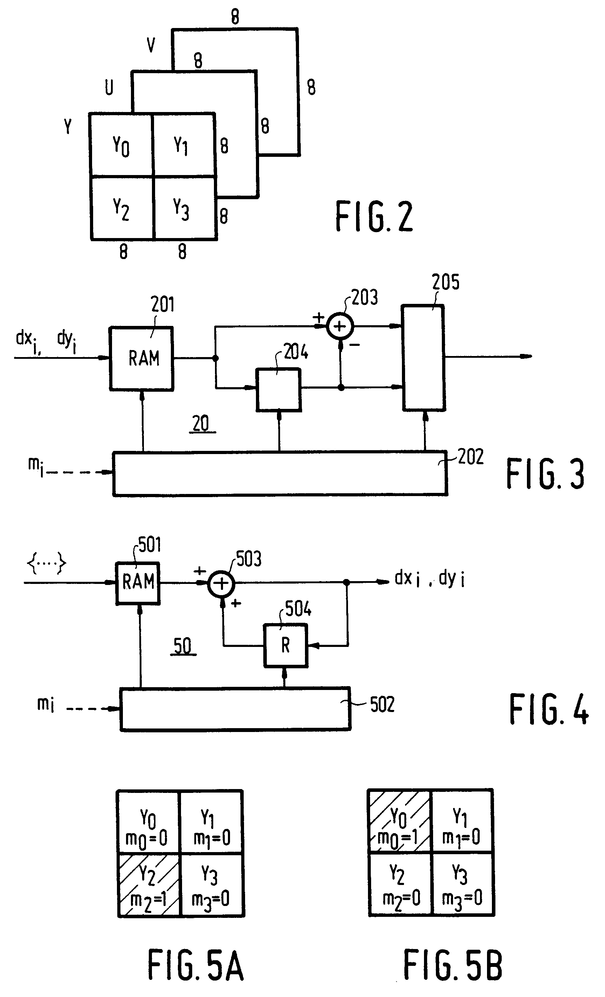

In practice, the picture transformer 13 and motion estimator 19 operate on picture blocks of, for example 8*8 pixels. The picture transform is separately realised for the luminance Y and the chrominance U and V of the television signal. If the sample frequency of the chrominance signals in the horizontal and vertical direction is half the sample frequency of the luminance signal, one chrominance block U and one chrominance block V is obtained for four luminance blocks Y. This is customarily referred to as a macro block. Such a macro block forms a sub-picture and is shown symbolically in Fig. 2. Other manners of forming a sub-picture from a plurality of contiguous blocks are, however, alternatively possible.

The motion estimation is performed for each of the luminance blocks. A separate motion estimation for the chrominance blocks may be refrained from because it may be assumed that they are subject to the same motion as the Y blocks. For each macro block $Y_0$, $Y_1$, $Y_2$, $Y_3$ (see Fig. 2) a motion vector $(dx_i, dy_i)$ is formed by the motion estimator 19 (see Fig. 1), in which $dx_i$ and $dy_i$ (i = 0 ... 3) represent the horizontal and vertical shift of a block with respect to the corresponding block in the prediction picture.

Fig. 3 shows a possible embodiment of the series former 20 shown in Fig. 1. It comprises a RAM 201 in which the motion vectors $(dx_i, dy_i)$ are stored at predetermined locations by the motion estimator. The RAM is read under the control of a sequencer 202. The values read are applied to a first input of a subtracter circuit 203. Moreover the values read can be stored in a register 204 in response to a clock signal generated by the sequencer. The second input of the subtracter circuit 203 is coupled to the output of register 204. Again under the control of the sequencer, either the output of the subtracter circuit or the output of the register is selected *via* a multiplexer 205 for supply to the variable-length encoder 21 (see Fig. 1).

The operation of the series former 20 is further based on instructions stored in the sequencer. In a first embodiment the sequencer carries out the following instructions:

1. store $dx_2$ in the register
2. apply $dx_3$ to the subtracter circuit
3. select the subtracter circuit, *i.e.* $dx_3-dx_2$
4. store $dx_0$ in the register
5. apply $dx_2$ to the subtracter circuit
6. select the subtracter circuit, *i.e.* $dx_2-dx_0$
7. apply $dx_1$ to the subtracter circuit
8. select the subtracter circuit, *i.e.* $dx_1-dx_0$
9. select the register, *i.e.* $dx_0$

In this way the series former forms a series of numbers:

$$\{dx_3-dx_2,\ dx_2-dx_0,\ dx_1-dx_0,\ dx_0\},$$

In other words, a series of difference vectors followed by a reference vector which is formed by $dx_0$ in this case. In a corresponding manner a series of numbers

$$\{dy_3\text{-}dy_2, dy_2\text{-}dy_0, dy_1\text{-}dy_0, dy_0\},$$

is subsequently formed for the vertical component of the motion vectors. In this second series of numbers, the reference vector is formed by $dy_0$.

The two series of numbers are applied to the variable-length encoder 21 (see Fig. 1). This encoder is of a type which allocates a code word of variable length to a series of zero values and a subsequent non-zero value. A favourable embodiment of such an encoder is described extensively in European Patent Application EP 0 260 748. If the difference vectors have the value of zero, the encoder supplies only one code word for each series of numbers. In practice, this frequently occurs so that the motion vectors of the sub-picture are encoded efficiently.

A second embodiment of the sequencer is adapted to generate the following series of numbers:

$$\{dy_3\text{-}dy_2, dy_2\text{-}dy_0, dy_1\text{-}dy_0, dx_3\text{-}dx_2, dx_2\text{-}dx_0, dx_1\text{-}dx_0, dy_0, dx_0\}$$

This series starts with the difference vectors in the vertical direction. These difference vectors often have the value of zero because the picture (particularly a 16:9 picture) is smaller in the vertical direction than in the horizontal direction. The relatively long series of numbers therefore often starts with many zero values. This contributes to the efficiency of the variable-length encoding. Moreover, much motion is caused by horizontal panning of the television camera. In that case the long series of numbers yields only one code word.

As is apparent from the series of numbers, the difference is determined by means of the motion vector of the adjoining block $Y_2$ for block $Y_3$ in both embodiments. This is more favourable than subtraction from the reference vector (as is done in the known device) because the reference vector is the motion vector of a block which is further remote (here $Y_0$) whose motion is less frequently equal. Determination of the difference between the motion vector of block $Y_3$ and that of block $Y_1$ would also be a suitable choice. It is even sensible to make a different choice for the horizontal component of the motion vector than for the vertical component.

A corresponding device for receiving the television pictures will now be described. In Fig. 1, the receiver 4 comprises a demultiplexer 40 by means of which the channel bit stream is split into encoded coefficients and encoded motion vectors. The receiver further comprises in known manner a variable-length decoder 41 for decoding the coefficients, an inverse quantizer and picture transformer 42, an adder circuit 43 for reconstructing the received picture, a prediction picture memory 44 and a motion compensator 45. The reconstructed picture is applied to an output 46. Variable-length decoder 41 performs the inverse operation of encoder 14.

In accordance with the invention, the encoded motion vectors are applied to a second variable-length decoder 47. This decoder performs the inverse operation of encoder 21 so that the series of numbers are obtained which are representative of the motion vectors. The series of numbers are subsequently converted by a converter 50 into the individual motion vectors (dx,dy) by means of which the motion compensator 45 reconstructs the blocks of the prediction picture.

Fig. 4 shows a possible embodiment of the converter 50 shown in fig. 1. It comprises a RAM 501 in which the decoded series of numbers is stored upon reception. The RAM is read under the control of a sequencer 502. The values which have been read are applied to a first input of an adder circuit 503. Its output is fed back *via* a register 504 to the second input of the adder circuit. The register receives clock and reset signals from the sequencer 502.

The operation of the converter 50 is further based on instructions which are stored in the sequencer. The converter performs the inverse operations of series former 20 in the transmitter (see Fig. 3). To this end, the sequencer carries out the following instructions in a first embodiment:

1. reset the register
2. read $dx_0$ from RAM, output signal is $dx_0$
3. clock output signal in the register
4. read $dx_1$-$dx_0$ from RAM, output signal is $dx_1$
5. read $dx_2$-$dx_0$ from RAM, output signal is $dx_2$
6. clock output signal in the register
7. read $dx_3$-$dx_2$ from RAM, output signal is $dx_3$

In this way the horizontal components $dx_i$ of the motion vectors of the sub-picture are regained. In a corresponding manner, the vertical components $dy_1$ are subsequently obtained. A second embodiment of the sequencer (for regaining the motion vectors from the previously described "long" series of numbers) can be derived by those skilled in the art from the foregoing explanation.

In some cases the motion within a picture is distributed in such a way that it is more favourable to subject given blocks to intraframe coding. In this way the situation may arise that one or more blocks of a sub-picture are transmitted in themselves (*i.e.* without motion vectors), whereas other blocks of the same sub-picture are subjected to motion compensated interframe coding. Such a strategy is used, *inter alia* in the known MPEG standard. A mode bit is generated by the motion estimator 19 (see Fig. 1) and transmitted so as to indicate the encoding mode used for each block.

In a corresponding embodiment of the series former 20 (see Fig. 3) the sequencer 202 is adapted to produce the series of numbers in dependence upon the encoding mode. As is shown in a broken line in Fig. 3, the sequencer now receives the mode bits $m_i$ (i = 0 ... 3) which correspond to the blocks $Y_0 ... Y_3$. By means of the value 1, the mode bit indicates that a block is subjected to intraframe coding and the value 0 indicates that it is subjected to interframe coding. To explain the operation of the sequencer, Figs. 5A and 5B show two examples of macro blocks, one block of which is subjected to intraframe coding. In Fig. 5A, the shaded block $Y_2$ represents an intraframe-coded block. In this case the sequencer forms the series of numbers:

$$\{dx_3 - dx_1, dx_1 - dx_0, dx_0\} \text{ and } \{dy_3 - dy_1, dy_1 - dy_0, dy_0\}$$

In Fig. 5B, $Y_0$ is the intraframe-coded block. Since no motion vectors are generated for this block, the motion vectors of the next interframe block (here $Y_1$) form the reference vector. The sequencer now forms the series of numbers:

$$\{dx_3 - dx_2, dx_3 - dx_1, dx_1\} \text{ and } \{dy_3 - dy_2, dy_3 - dy_1, dy_1\}$$

The sequencer 502 (see Fig. 4) in the receiver performs the inverse operations for regaining the motion vectors. Embodiments of the two sequencers can be simply derived by those skilled in the art from the previous explanation.

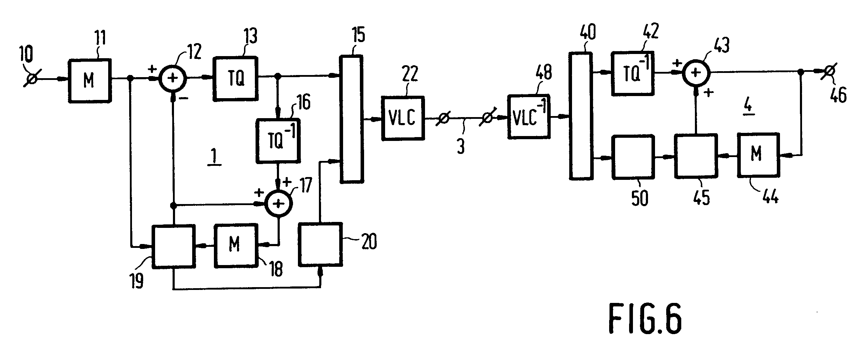

Fig. 6 shows a further embodiment of a transmission system comprising a transmitter and a receiver according to the invention. Identical reference numerals refer to the same elements as in Fig. 1. The system is distinguished from the system shown in Fig. 1 in that the transmitter 1 comprises a variable-length encoder 22 for encoding coefficients as well as motion vectors. To this end, the multiplexer 15 is arranged in front of said encoder. The variable-length encoder is of the type which allocates a code word of variable length to a series of zero values and a subsequent non-zero value. In a corresponding manner, the receiver 4 comprises one variable-length decoder 48 and, arranged behind it, the demultiplexer 40 for splitting coefficients and motion vectors. The embodiment shown in Fig. 6 is both economical and efficient. On the one hand, a variable-length (de)coder is saved in each transmitter and receiver. On the other hand, it has been found that the series of numbers representing motion vectors are statistically satisfactorily suitable for the series of coefficients to which relatively short code words are allocated.

The devices according to the invention may also be used in encoding systems in which only one motion vector per macro block is generated. This is, for example the case in the MPEG standard. In this case a sub-picture can be formed across a plurality of contiguous macro blocks. The series of numbers for supply to the variable-length encoder is then formed in the manner already described from the corresponding plurality of motion vectors.

It should finally be noted that the same reference vector whose value is derived from the pan and tilt movements of the television camera supplying the television pictures can be transmitted for the entire picture.

## Claims

1.   A device for transmitting television pictures, comprising:

means for dividing each television picture into blocks;
means for encoding residual blocks representing the difference between a block and a prediction block defined by a motion vector;
means for arranging the motion vectors of contiguous blocks forming a sub-picture into a reference vector and a plurality of difference vectors, the motion vector of a selected block constituting the reference vector;
a variable-length encoder for encoding the reference vector and the difference vectors into code words of variable length; and
means for transmitting said encoded residual blocks and code words; characterized in that the variable-length encoder is of a type which allocates a code word of variable length to series of zero values and a subsequent non-zero value, the difference vectors of a sub-picture being applied to said encoder prior to the reference vector of said sub-picture.

2.   A device as claimed in Claim 1, wherein the difference vectors of a sub-picture are formed from the motion vectors of contiguous blocks of said sub-picture.

3. A device as claimed in Claim 1, characterized in that the blocks of the sub-picture are subjected to either an intraframe encoding mode or an interframe encoding mode, in which the difference vectors and/or the reference vector are formed from the motion vectors of the blocks subjected to the interframe encoding mode.

4. A device as claimed in Claims 1 further comprising a picture transformer for transforming each block into coefficients and a variable-length encoder for encoding the coefficients, the variable-length encoder for encoding the motion vectors being constituted by the variable-length encoder for encoding the coefficients.

5. A device for receiving television pictures, comprising:

means for receiving residual blocks representing the difference between image blocks of said pictures and prediction blocks defined by respective motion vectors;
means for receiving code words of variable-length representing said motion vectors;
a variable-length decoder for decoding said code words of variable length into difference vectors and a reference vector;
means for forming, from the difference vectors and reference vector applied by the variable-length decoder, the motion vectors of a plurality of contiguous blocks which form a sub-picture;
means for regaining the television picture from said residual blocks and corresponding motion vectors,
characterized in that the variable-length decoder is of a type which decodes a code word of variable length into a series of zero values and a subsequent non-zero value, and is arranged to decode the difference vectors of a sub-picture prior to the reference vector of said sub-picture.

6. A device as claimed in Claim 5, characterized in that the motion vectors are formed from the series of difference vectors and/or the reference vector in dependence upon a received encoding mode which indicates for the blocks of the sub-picture whether these blocks are subjected to either an intraframe encoding mode or an interframe encoding mode.

7. A device as claimed in Claim 5 or 6, further comprising a variable-length decoder for decoding coefficients and a picture transformer for transforming the coefficients in a block, the variable length decoder for decoding the motion vectors being constituted by the variable-length decoder for decoding the coefficients.

8. A video recorder comprising a device as claimed in any one of Claims 1-4 and a device as claimed in any one of Claims 5-7.

**Patentansprüche**

1. Anlage zur Übertragung von Fernsehbildern, mit:

- Mitteln zum Aufteilen jedes Fernsehbildes in Blöcke;
- Mitteln zum Codieren von Restblöcken, welche die Differenz zwischen einem Block und einem durch einen Bewegungsvektor gebildeten Prädiktionsblock;
- Mitteln zum Umwandeln der Bewegungsvektoren benachbarter Blöcke, die ein Unterbild formen, in einen Bezugsvektor und eine Anzahl Differenzvektoren, wobei der Bewegungsvektor eines selektierten Blocks den Bezugsvektor bildet;
- einem Veränderliche-Längen-Codierer zum Codieren des Bezugsvektors und der Differenzvektoren in Codeworte veränderlicher Länge; und
- Mittel zum Übertragen der genannten codierten Restblöcke und der Codeworte; dadurch gekennzeichnet, dass der Veränderliche-Längen-Codierer von einem Typ ist, der Reihen von Null-Werten und einem nachfolgenden Nicht-Nullwert ein Codewort veränderlicher Länge zuordnet, wobei die Differenzvektoren eines Unterbildes dem genannten Codierer zugeführt werden, und zwar vor dem Bezugsvektor des genannten Unterbildes.

2. Anlage nach Anspruch 1, wobei die Differenzvektoren eines Unterbildes aus den Bewegungsvektoren benachbarter Blöcke des genannten Unterbildes geformt werden.

3. Anlage nach Anspruch 1, dadurch gekennzeichnet, dass die Blöcke des Unterbildes entweder einer Intrafram-Codeirung oder einer Interframe-Codierung ausgesetzt werden, wobei die Differenzvektoren und/oder der Bezugsvektor aus den bewegungsvektoren der Blöcke geformt werden, die der Interframe-Codierung ausgesetzt worden sind.

**4.** Anlage nach Anspruch 1, weiterhin mit einem Bildtransformator zum Transformieren jedes Blocks in Koeffizienten und mit einem Veränderliche-Längen-Codierer zum Codieren der Koeffzienten, wobei der Veränderliche-Längen-Codierer zum Codieren der Bewegungsvektoren durch den Veränderliche-Längen-Codierer zum Codieren der Koeffizienten gebildet wird.

**5.** Anlage zum Empfangen von Fernsehbildern, mit:

- Mitteln zum Empfangen von Restblöcken, welche die Differenz zwischen Bildblökken der genannten Bilder und durch die betreffenden Bewegungsvektoren definierten Prädiktionsblöcken darstellen;
- Mitteln zum Empfangen von Codeworten veränderlicher Länge, welche die genanten Bewegungsvektoren darstellen;
- einem Veränderliche-Längen-Decoder zum Decodieren der genannten Codeworte veränderlicher Länge in Differenzvektoren und einen Bezugsvektor;
- Mitteln zum aus den Differenzvektoren und dem Bezugsvektor, die von dem Veränderliche-Längen-Decoder zugeführt worden sind, Bilden der Bewegungsvektoren einer Anzahl benachbarter Blöcke, die ein Unterbild bilden;
- Mitteln zum Neuverstärkern des Fernsehbildes aus den genannten Restblöcken und entsprechenden Bewegungsvektoren,
  dadurch gekennzeichnet, dass der Veränderliche-Längen-Decoder von einem Typ ist, der ein Codewort veränderlicher Länge in eine Reihe von Nullwerten und einem nachfolgenden Nicht-Nullwert decodiert, und vorgesehen ist zum Decodieren der Differenzvektoren eines Unterbildes vor dem Bezugsvektor des genannten Unterbildes.

**6.** Anlage nach Anspruch 5, dadurch gekennzeichnet, dass die bewegungsvektoren aus der Reihe von Differenzvektoren und/oder dem Bezugsvektor gebildet werden, und zwar in Abhängigkeit von einer empfangenen Codierungsmode, die für die Blöcke des Unterbildes angibt, ob diese Blöcke entweder einer Intraframecodierungsmode oder einer Interframecodierungsmode ausgesetzt werden.

**7.** Anlage nach Anspruch 5 oder 6, weiterhin mit einem Veränderliche-Längen-Decoder zum Decodieren von Koeffizienten und mit einem Bildtransformator zum Transformieren der Koeffizienten in einem Block, wobei der Veränderliche-Längen-Decoder zum Decodieren der Bewegungsvektoren durch den Veränderliche-Längen-Decoder zum Decodieren der Koeffizienten gebildet wird.

**8.** Videorecorder mit einer Anlage nach einem der Ansprüche 1 - 4 und mit einer Anlage nach einem der Ansprüche 5 - 7.

**Revendications**

**1.** Dispositif pour émettre des images de télévision, comprenant :

un moyen pour diviser chaque image de télévision en blocs ;
un moyen pour coder des blocs résiduels représentant la différence entre un bloc et un bloc prédictif défini par un vecteur de mouvement ;
un moyen pour disposer les vecteurs de mouvement de blocs contigus formant une sous-image en un vecteur de référence et une pluralité de vecteurs de différence, le vecteur de mouvement d'un bloc sélectionné formant le vecteur de référence ;
un codeur à longueur variable pour coder le vecteur de référence et les vecteurs de différence en des mots de code de longueur variable, et un moyen pour transmettre lesdits blocs résiduels et mots de code codés,

caractérisé en ce que le codeur à longueur variable est d'un type qui attribue un mot de code de longueur variable à une série de valeurs zéro et d'une valeur subséquente différente de zéro, les vecteurs de différence d'une sous-image étant appliqués audit codeur avant le vecteur de référence de ladite sous-image.

**2.** Dispositif suivant la revendication 1, dans lequel les vecteurs de différence d'une sous-image sont formés à partir des vecteurs de mouvement de blocs contigus de ladite sous-image.

**3.** Dispositif suivant la revendication 1, caractérisé en ce que les blocs de la sous-image sont soumis soit à un mode de codage intra-image, soit à un mode de codage entre trames, dans lequel les vecteurs de différence et/ou le vecteur de référence sont formés à partir des vecteurs de mouvement des blocs soumis au mode de codage entre trames.

**4.** Dispositif suivant la revendication 1, comprenant en outre un transformateur d'images pour transformer chaque bloc en coefficients et un codeur à longueur variable pour coder les coefficients, le codeur à longueur variable pour coder les vecteurs de mouvement étant formé par le codeur à longueur variable pour coder les coefficients.

**5.** Dispositif de réception d'images de télévision, comprenant : un moyen pour recevoir les blocs résiduels représentant la différence entre les blocs d'image desdites images et les blocs prédictifs définis par des vecteurs de mouvement respectifs ;

un moyen pour recevoir des mots de code de longueur variable représentant lesdits vecteurs de mouvement ; un décodeur à longueur variable pour décoder lesdits mots de code de longueur variable en vecteurs de différence et un vecteur de référence ; un moyen pour former, à partir des vecteurs de différence et du vecteur de référence appliqués par le décodeur à longueur variable, les vecteurs de mouvement d'une pluralité de blocs contigus qui forment une sous-image ;
un moyen pour récupérer l'image de télévision à partir desdits blocs résiduels et des vecteurs de mouvement correspondants,
caractérisé en ce que le décodeur à longueur variable est d'un type qui décode un mot de code de longueur variable en une série de valeurs zéro et d'une valeur subséquente différente de zéro et est propre à décoder les vecteurs de différence d'une sous-image avant le vecteur de référence de ladite sous-image.

**6.** Dispositif suivant la revendication 5, caractérisé en ce que les vecteurs de mouvement sont formés à partir de la série de vecteurs de différence et/ou du vecteur de référence en fonction d'un mode de codage reçu qui indique pour les blocs de la sous-image si ces blocs sont soumis à un mode de codage intra-image ou à un mode de codage entre trames.

**7.** Dispositif suivant la revendication 5 ou 6, comprenant en outre un décodeur à longueur variable pour décoder les coefficients et un transformateur d'image pour transformer les coefficients en un bloc, le décodeur à longueur variable pour décoder les vecteurs de mouvement étant formé par le décodeur à longueur variable pour décoder les coefficients.

**8.** Magnétoscope comprenant un dispositif suivant l'une quelconque des revendications 1-4, et un dispositif suivant l'une quelconque des revendications 5-7.

FIG.1

EP 0 651 582 B1

FIG.2

FIG.3

FIG.4

FIG.5A

FIG.5B

FIG.6